# EUROPEAN PATENT APPLICATION

(11) **EP 3 605 059 A1**
(43) Date of publication of application: **05.02.2020**
(21) Application number: 18186449.7
(22) Date of filing: 31.07.2018
(51) Int. Cl.: G01N 15/10, G01N 15/14, G01N 15/00, G01N 15/06

(54) **PARTICLE SENSOR AND SENSING METHOD**

(71) Applicant: Koninklijke Philips N.V., 5656 AE Eindhoven (NL)
(72) Inventor: CHEN, Shuang, 5656 AE Eindhoven (NL); KONG, Tao, 5656 AE Eindhoven (NL); VAN DER SLUIS, Paul, 5656 AE Eindhoven (NL)
(74) Representative: de Haan, Poul Erik

(57) **Abstract**

A particle or pollen sensing method in which a relative humidity is controlled in a particle treatment region and the particle size is determined before and after humidity treatment. A particle type is then identified based on particle property changes such as size, electrical properties or optical properties, caused by the humidity treatment.

## Description

### FIELD OF THE INVENTION

This invention relates to a method and apparatus for detecting pollen or other particles.

### BACKGROUND OF THE INVENTION

It is well known that it is desirable to monitor pollution levels, such as particulate pollutants including pollen.

Pollen are important allergens that may have a serious impact on people's well-being. In addition, they are asthma triggers. To prevent or minimize human exposure, it is important to detect pollen to which humans may be exposed. The information obtained can be used to prompt other actions, for example to vacuum clean the enclosure in which the sensitive person resides or to clean surfaces in such an enclosure. This may be performed automatically, or an alert may be provided to a user to perform the cleaning action manually.

Numerous methods have been utilized to quantify the number of pollen grains in a sample. Basically, these methods can be divided into two major categories: counting with the human eye, and automated pollen counting.

Various sensing devices are known for automated pollen counting, which for example provide a particle concentration level for particles below a certain size, or particles over a certain size, or within a size range. Laser-based optical particle sensing approaches are for example known based on optical scattering. Image processing techniques can also be used.

However, different particles have different health impacts on people. Therefore, detection and differentiation of different particles is of great importance, especially for people with respiratory disease. However, current low cost optical scattering particle sensors only detect particle number (and mass) concentration, and no further information is offered about particle types.

One way to distinguish between different types of particle such as pollen particles is to determine the particle size or particle size distribution. However, sensors for accurately determining size distribution information are expensive and generally only used in professional applications.

Some known pollen sensors, again based on optical detectors, are further configured to detect the polarization signatures of the scattered light from pollen. Such sensors can for example distinguish between different types of pollen and other dust by comparing the amount of scattered light and degree of polarization. A system based on optical scattering has for example been produced by the company Shinyei Technology Co., Ltd. Two light detectors are used to determine size and surface configuration and polarization signature of particles, and discriminate pollen from other particles based on the information of the scattered light. This system is limited in the different pollen types which can be identified.

There remains a need for a system and method which enables pollen or other particles to be identified with increased reliability and with real time low cost monitoring.

### SUMMARY OF THE INVENTION

The invention is defined by the claims.

According to an example in accordance with the invention, there is provided a particle or pollen sensor comprising:
a treatment region;
a humidity control system for controlling the relative humidity in the treatment region;
a particle analysis system for determining particle size before and after treatment in the treatment region; and
a processor for identifying a particle type based on particle size changes caused by the treatment.

This system detects particles based on the effect of relative humidity on the particle size. The invention is based on the recognition that humidity has different effects on different types of particle. In particular, biological particles such as pollen swell in high humidity conditions and shrink in low humidity conditions. Organic particles generally have a constant size, and inorganic particles have a different response to humidity. Thus, the system is able to identify pollen.

Furthermore, different pollen types will have different characteristic responses to humidity changes, as well as different typical size ranges. Thus, the system may also be configured to be able to distinguish between different types of pollen.

Note that the control of the humidity may be active (i.e. a humidity level may be adjusted to a desired level) or passive (i.e. there is a material or device which changes the humidity but it does not have any control input).

The treatment region may comprise a treatment chamber, and the particle analysis system comprises:
a first analysis system upstream of the treatment chamber; and
a second analysis system downstream of the treatment chamber.

This implementation for example makes use of analysis of a gas flow containing the particles, with a flow through the treatment chamber where the humidity is controlled. There is then analysis before and after the treatment chamber to detect changes in particle size.

Alternatively, with the treatment region again comprising a treatment chamber, the particle analysis system may comprise:
a single analysis system for use alternately in analyzing a particle flow upstream and downstream of the treatment chamber.

The same analysis system then analyzes the flow before and then after treatment, i.e. in a time sequential manner.

There may be two or more treatment chambers, and the particle analysis system is for determining particle size upstream and downstream of each treatment chamber. Thus, the particles may be subjected to a range of different humidity values.

The treatment chamber may comprise a hydration chamber, and the humidity control system comprises a water tank or a hydrogel. The release of water may be passive (e.g. release from a paper filter) or active (e.g. by ultrasound humidification).

The treatment chamber may comprise a dehydration chamber, and the humidity control system comprises a heating tube or a drying agent.

When multiple treatment chambers are used, there may be chambers of both types.

The particle analysis system may comprise an optical scattering analysis system for obtaining a particle count and particle size distribution information. Thus, the system can obtain a particle size as well as information about the effect of humidity. In combination, this may enable different pollen types to be identified.

In another set of examples, the treatment region comprises a particle capture zone, and the humidity control system comprises:
a first input for receiving relatively dry air;
a second input for receiving relatively humid air; and
a selection valve for coupling the first or second input to the particle capture zone.

In this arrangement, the particles are held in a static location, and moist or dry air is supplied to that location. The first input is for example coupled to a moisture absorbent and the second input is coupled to a source of humidity.

The particle analysis system may then comprise an optical or electrical sensor for detecting changes in the optical or electrical properties of the particle capture zone. Thus, the presence of a particle, and its size, alters a characteristic of the particle capture zone. The particle capture zone for example implements a strain gauge.

In a basic implementation, the particle type to be detected comprises pollen or not-pollen. This may for example be obtained based on electrical characteristics.

The sensor may then further comprise a further optical analysis system for determining, for a detected pollen particle, a type of pollen. This provides a two-stage pollen analysis approach, where only detected pollen is further investigated to identify a pollen type.

The invention also provides a particle or pollen sensing method comprising:
controlling the relative humidity in a treatment region;
determining a particle size before and after treatment; and
identifying a particle type based on particle size changes caused by the treatment.

The method may comprise controlling the relative humidity by increasing the relative humidity compared to an ambient relative humidity and/or decreasing the relative humidity compared to the ambient relative humidity.

### BRIEF DESCRIPTION OF THE DRAWINGS

Examples of the invention will now be described in detail with reference to the accompanying drawings, in which:
Figure 1 shows a particle or pollen sensor in accordance with an example of the invention;
Figure 2 shows an example of a particle sensor which may be employed in the sensor of Figure 1;
Figure 3 shows a modification to the configuration of Figure 1 in which a single particle sensor is used;
Figure 4 shows a first possible example of the treatment region, for performing hydration;
Figure 5 shows a second possible example of the treatment region, for performing dehydration;
Figure 6 shows an alternative implementation in which the treatment region comprises a particle capture zone; and
Figure 7 is used to explain the operation of the system of Figure 6;
Figure 8 shows a material response of the flexible material of the implementation of Figure 6 as the valve toggles between on (humid air) and off (dry air) positions, for a dust particle and for a pollen particle.

### DETAILED DESCRIPTION OF THE EMBODIMENTS

The invention provides a particle or pollen sensing method in which a relative humidity is controlled in a particle treatment region and the particle size is determined before and after humidity treatment. A particle type is then identified based on particle property changes such as size, electrical properties or optical properties, caused by the humidity treatment.

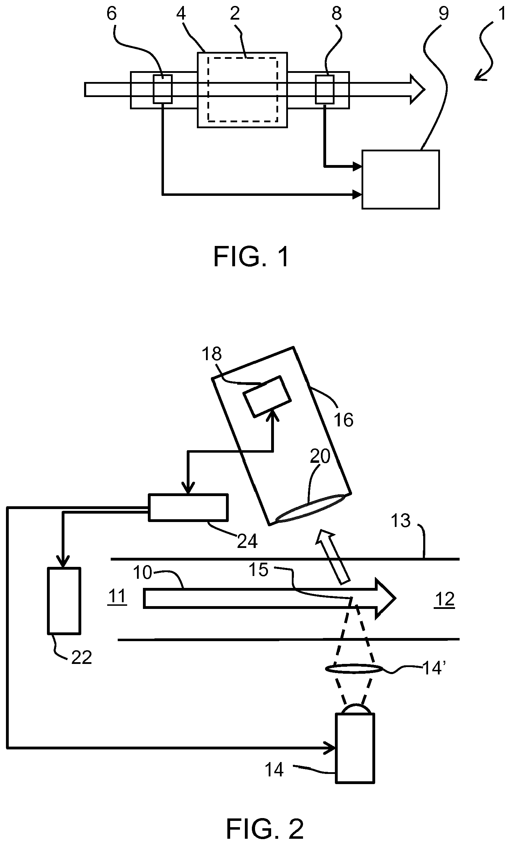

Figure 1 shows a particle or pollen sensor 1 comprising a treatment region 2 within a humidity control system 4, which controls the relative humidity in the treatment region 2. A particle analysis system is provided for determining particle size before and after treatment. In the example of Figure 1, there are separate particle sensors 6, 8 upstream and downstream of the treatment region 2, and the sensor is an in-flow sensor.

Other possible configurations are discussed below. A processor 9 is provided for identifying a particle type based on particle size changes caused by the humidity treatment.

The sensor monitors effect of relative humidity on the particle size. Biological particles such as pollen swell in high humidity conditions and shrink in low humidity conditions. Organic particles generally have a constant size, and inorganic particles have a different response to humidity. Thus, the system is able to identify pollen. Different pollen types will have different particle size distributions as well as different characteristic responses to humidity changes. Thus, the system may also be configured to be able to distinguish between different types of pollen.

By way of example, biological particles such as pollen typically have a diameter in the range 20 to 200µm, increase in size in high relative humidity conditions and decrease in size in low relative humidity conditions. Inorganic particles such as salts typically have smaller size such as 2.5 or 5µm, and they increase in size in high relative humidity conditions but may then dissolve. Thus, there is a different temporal response. The size may remain constant or may decrease in low relative humidity conditions. Organic particles may also have smaller size such as 2.5 or 5µm, but they remain constant in size in different relative humidity conditions.

By identifying a particle type, appropriate prevention solutions may be adopted. The detection of target particles may be used to complete an allergy map, and individuals may receive personalized information relating to their specific allergens.

A first example of the invention is based on particle sensors which perform optical size distribution measurement.

Figure 2 shows an example of a particle sensor which may be employed. There is a fluid (gas) flow 10 from an inlet 11 of a flow channel 13 to an outlet 12 of the flow channel 13. The flow channel 13 is formed by a conduit which has a length between the inlet 11 and outlet 12. The particles pass through a region which is irradiated by a light source 14 for providing light which is scattered by the particles to generate scattered light. The scattered light is detected by a light detector 16. A collimator 14' focuses the incident light from the light source 14 into a small measurement zone 15, in which only one particle is present at any moment to realize individual particle detection.

Thus, the sensor provides particle counting as well as individual particle sizing.

A flow control device 22, shown schematically in Figure 1, is used for inducing flow through the particle sensor. It may comprise a fan, or a heater to create a convective heat flow. In a system using heating, the resulting buoyancy causes air to flow towards the top of the detector, carrying the particles through the flow channel. In such a case, the flow channel may be vertically upwards.

The light source is to one side of the flow channel 13 and the light detector 16 is on the opposite side. An alternative design may make use of the reflection of light. The light source maybe a laser diode (e.g. pulsed laser) or an infrared LED.

The particles are irradiated in the measurement zone 15 at transparent portions of the conduit that defines the flow channel 13, which allow the light to pass through the conduit. The conduit may be part of a housing which is placed on a printed circuit board with the electronics to convert the signal due to the particles into a count. Leakage of incident light directly towards the photodiode light detector, which would give a background signal, is minimized.

The light detector 16 comprises a photodiode sensor 18 and a focusing lens 20 at which scattered light is detected thereby generating a light detector signal. The controller 24 controls the operation of the flow control device and light source.

For particle sizing, the detector signal may be amplified and compared with a threshold voltage. The threshold is implemented as a threshold voltage applied to a comparator which controls the particle size sensitivity of the sensor system. Above a certain particle size, the peak height is sufficient to pass the threshold. The threshold thus implements a band pass filtering function. The pulse is counted to implement particle counting and the pulse length is measured to provide particle sizing. For a large set of detection pulses a measure of a low-pulse occupancy time (LPO%) is for example used.

Thus, there are two basic outputs. One is a simple particle count, which is a count of the number of detection peaks which exceed the threshold set. The other is an amplitude of an analog signal, which is proportional to the particle size.

For detecting a stream of particles, the sensor may be used to perform size binning. The threshold voltage provided to the comparator sets the boundary limit for the analog signal. For example, a IV threshold means that all signals above IV will be registered as a detection signal, hence corresponding to all particle sizes that generate an analog signal above IV. Likewise, a 2V threshold raises the boundary for allowing only larger sized particles to generate an output.

For simplicity a IV threshold voltage may correspond to signals generated for particles of 1µm diameter and above, whereas as 2V threshold may correspond to particles of 2µm diameter and above. In order to generate particle count information for a specific particle size range (also known as a 'size bin'), for a particle size range between 1µm and 2µm, the number of signals generated at these threshold voltages are subtracted.

Thus, the optical scattering sensor may be used for measuring individual particle sizes in an analog manner, or for recording particle sizes into bins in a more digital manner.

The humidity control system 4 either increases or decreases the relative humidity compared to the ambient level, or it may be controllable to do both, or there may be multiple parts to the humidity control system.

Thus, the invention in this example combines particle size detection, including an initial particle size and a particle size after a humidity treatment. The humidity control system in this example comprises a chamber in which the relative humidity is different from the ambient. The processor performs data analysis of the obtained data to identify particle types. It may also identify potential hazard risks and give corresponding health suggestions (such as pollution exposure limitation, indicate the need to wear a mask and which mask type is recommended, or indicate a medicine which needs to be taken.

In the arrangement of Figure 1, a particle size change value Δ is obtained, which is indicative of particle type.

For example, when drying is carried out, there is a shrinkage in pollen size whereas when there is an increase in humidity, swelling takes place.

For example, experiments have demonstrated that the drying is carried out very quickly, and within a second there is a detectable size change (e.g. for Elm pollen, approximately 10 % shrinkage within 3 seconds).

By way of example, the detection zone length may be around 2.5 cm which is suitable for a compact sensor. For an air flow of 0.5 L/min, and a cross sectional area of detection zone of 10 cm² (approximately 3 cm × 3 cm), the flow speed is calculated as 50 cm/minute, so a length of detection zone of 2.5 cm gives a transit time of 3 seconds.

Experiments have demonstrated that the humidification is carried out with swelling almost immediately when in contact with a water solution. A similar response will arise happen if the relative humidity is very high (i.e. close to 100 % RH).

For a medium relative humidity of 70 % RH a size increase of around 20 % is observed in 25 minutes (for dry pine pollen), corresponding to 2 % in 2.5 minutes.

Thus, a drying method is preferred. Also, newly generated pollen typically contains a significant amount of water, so that a drying method is suitable.

If using only drying, a detection could be performed within 30 seconds (to give a certain buffer time). For a humidification approach or a combined approach, the detection could be implemented in seconds to a few minutes.

The system is able to process a single particle at a time. This follows from the number of particles that is typically present. For example, a high pollen concentration is as low as 20 to 100 particles per m³.

Assuming a flow rate of 0.5L/minute, a concentration of 100 particles per m³ will result in one particle passing the sensor on average every 20 minutes. 20 particles per m³ will result in one particle passing the sensor on average every 100 minutes.

In order to ensure detection of a single particle, additional measures maybe taken.

First, it is desirable to ignore particles below a threshold size, such as 10µm diameter. These can for example be made to bypass the sensor, for example by using an impactor or other known approach.

If the concentration of all large particles (greater than 10µm) including the pollen to be detected is below a threshold, it will still be the case that there is a single particle passing the sensor volume at a time. For example, if the total concentration of large particles is below 1000/m³, there will be a particle on average only every 2 minutes or more. Thus, it can be assumed that there is the passage of a single particle through the sensor at a time, some of which will be the pollen particles to be sensed.

If the total concentration of large particles is above 1000/m³ a global value for the particle size change Δ may be used for a batch of particles. Thus, the particle size change value typically relates to a single particle, but it may equally relate to a batch of particles. In such a batch, it is still extremely likely that only a single pollen particle will be present at a time as a result of the low pollen concentration.

Note that the arrangement of Figure 1 maybe extended to include more than two particle sensors and two or more treatment chambers. For each particle, there may then be two or more particle size change values (particle size before treatment, particle size after treatment 1, particle size after treatment 2, etc.).

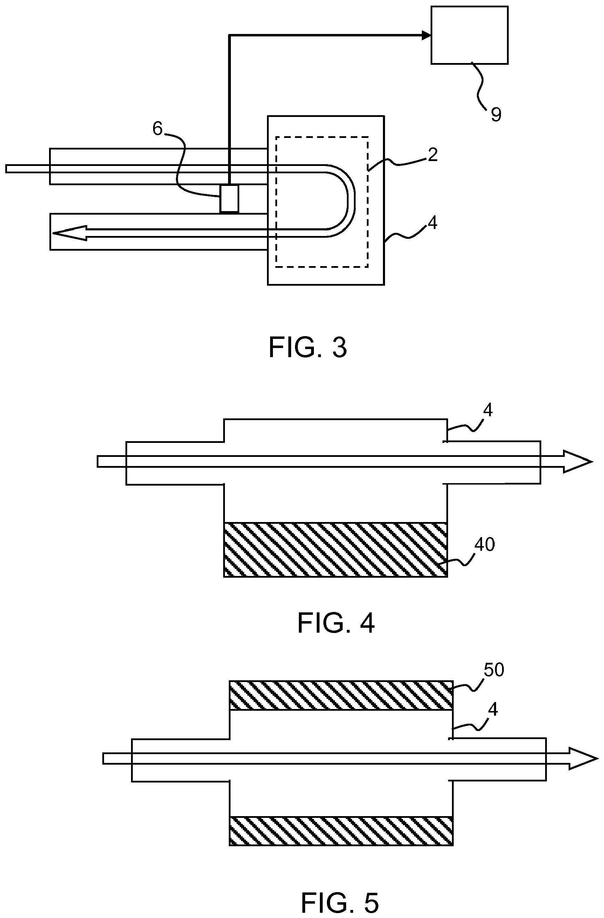

Figure 3 shows an example in which a single particle sensor 6 is used, which detects the particle sizes before and after the treatment based on a flow path which returns to pass the particle sensor 6.

The sensor 6 may be rotated between sensing of the incoming particle and sensing of the outgoing particle.

The size difference Δ is again obtained to provide information about the particle type. Particle size information may be obtained at more than two instances by forming the particle to move in a loop so that it passes a treatment region multiple times.

Another option is to use a bidirectional fan, which draws an air sample into the treatment region past an analysis system, then expels the air sample from the treatment region past the same analysis system. A valve may be used to isolate the air sample once drawn into the treatment region.

Thus, various options are possible other than the particular arrangement shown in Figure 1.

Figure 4 shows a first possible example of the treatment region 4 (in the form of a chamber) for performing hydration.

The chamber comprises a hydrating arrangement 40, which may comprise a hydrogel, a water tank with ultrasound induced humidification, or a water tank with water release structures such as paper filters.

Figure 5 shows a second possible example of the treatment region 4 (in the form of a chamber) for performing dehydration.

The chamber comprises a dehydrating arrangement 50, which may comprise a heater or drying agent.

The chamber could be an in-line cylindrical chamber as schematically shown but other shapes are also possible such as helical, in order to increase the contact area. The inner wall could be coated with a low surface energy paint in order to avoid particle deposition on the wall surface.

The sensor may comprise a particle filter, so that the analysis is only carried out for certain particle size ranges. For example, pollen particles are in the range 20 to 100µm, so particle filtering may be used to remove smaller particles so that the detection within that range is more accurate.

The examples above are based on optical scattering detection before and after humidity treatment, in an in-line system.

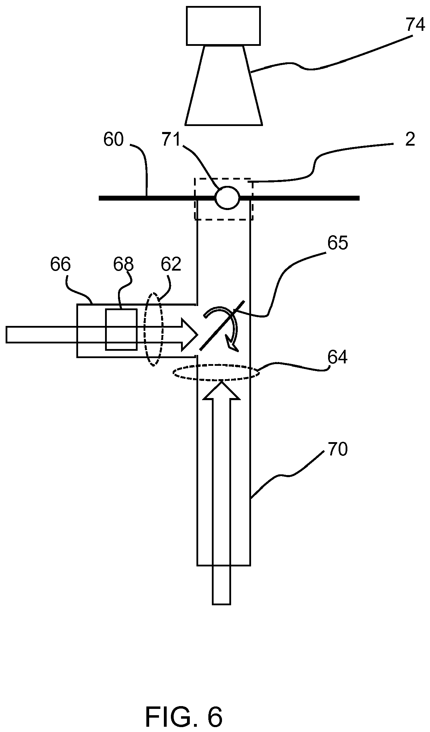

Figure 6 shows an alternative implementation in which the treatment region 2 comprises a particle capture zone 60. The humidity control system comprises a first input 62 for receiving relatively dry air, a second input 64 for receiving relatively humid air and a selection valve 65 for coupling the first or second input 62, 64 to the particle capture zone 60.

The sensor has a first conduit 66 in which moisture absorbent 68 is provided upstream of the first input 62. A second conduit 70 receives humid air from a humidifier, dehumidifier, or combined air humidification and purification system. The second conduit 70 leads to the second input 64.

The particle capture zone 60 is a flexible material used to capture the particles 71. A microscopic shape change takes place when a particle is captured, and the electrical or optical properties of the material are modulated by its shape change.

An optical system 74 is used to analyze the particles to determine a pollen type as discussed further below.

Flexible materials consisting of two basic components, a substrate and an active element, have been developed with this capability. For the substrate, polydimethylsiloxane (PDMS), polyimide (PI) and cellulose paper are frequently used materials, while active elements include carbon nanotubes (CNT), graphene, silver nanowires, and poly(3,4-ethylenedioxythiophene):poly(styrenesulfonate) (PEDOT:PSS).

The electrical or optical properties can be readily changed based on a length or shape change. Besides, with suitable voltage control, some of these materials may also induce structural deformation. Reference is for example made to Zhou et al., Ultrasensitive, Stretchable Strain Sensors Based on Fragmented Carbon Nanotube Papers, ACS Applied Materials & Interfaces, 2017, 9, 4835-4842. The material in this example is fabricated by a composite of single-walled carbon nanotubes and PDMS. According to the test results, the sensitivity is sufficient to detect the size change of pollen with several tens of microns.

Another reference is for example made to Teo et al., Highly Stretchable and Highly Conductive PEDOT:PSS/Ionic Liquid Composite Transparent Electrodes for Solution-Processed Stretchable Electronics, ACS Applied Materials & Interfaces, 2017, 9, 819-826. In this example, the ionic liquid 1-ethyl-3-methylimidazolium tetracyanoborate was added to conducting PEDOT:PSS polymer, resulting in highly stretchable and highly conductive composite for stretchable electronics.

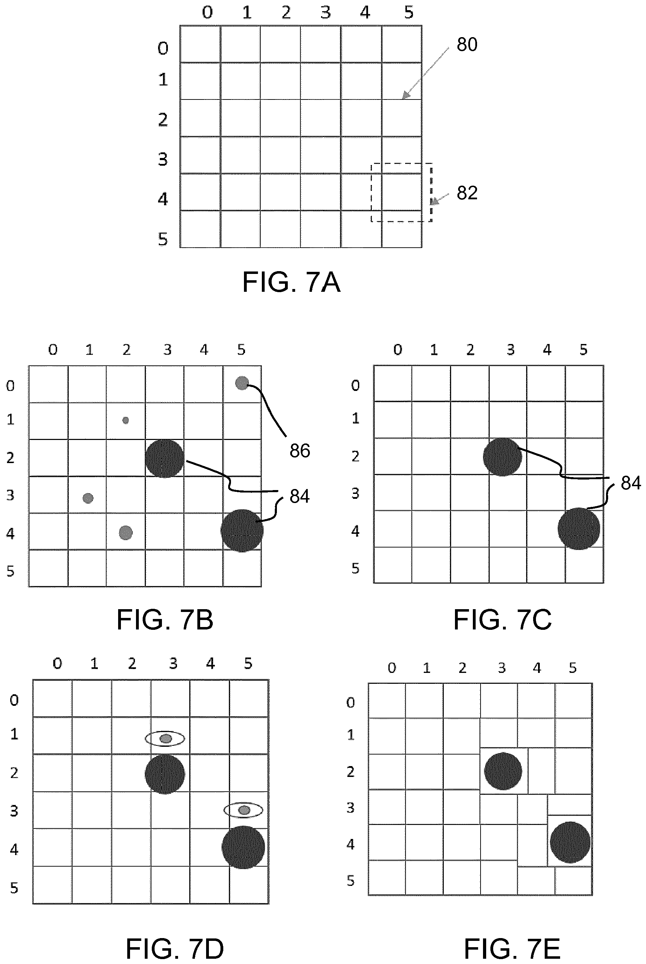

Figure 7 is used to explain the operation of the system of Figure 6.

Figure 7A shows a patterned sensing array 80, in which each individual unit 82 of the array is addressable. The framework is formed of a functional material as discussed above.

To perform particle capture, each unit of the capture zone has an orifice with a gap size selected according to the particle types to be detected. For example, the gap size may be 10µm so that all particles smaller in diameter than 10µm are allowed to pass, whereas larger particles will become lodged.

As shown in Figure 7B, large particles 84 are trapped, whereas small particles 86 below the hole size will pass through.

Once the large particles are trapped as shown in Figure 7C, the valve is controlled to create a high or low humidity zone.

For example, this is carried by subjecting the particle to a dry environment and then to a humid environment. This humidity control is carried out by controlling the valve 65 which couples one of the first and second inputs 62, 64 to the capture zone. During the switching between humid air and dry air, the electrical or optical properties of the flexible material/device are recorded.

In particular, when a particle has been captured, changes in size may be detected based on changes in the properties of the material layer. For example, the electrical response of the functional material is monitored in each unit, to determine if the response is from pollen or dust. The electrical parameters being monitored may be a current, resistance or capacitance. Optical properties may instead be measured, such as light intensity or reflectance.

As shown schematically in Figure 7D, if the electrical response varies with the humidity change, which indicates the presence of pollen, the identity of the unit is recorded (e.g. row 2 column 3 and row 4 column 5 in the example shown). Thus, if the particle is found to swell and/or shrink, it can be determined that it is a pollen particle.

The optical system preferably comprises a microscopy unit which is focused onto these units so that the pollen type may be identified using microscopic imaging. The microscopy unit (or other optical sensor array) is used to determine the pollen type by looking into the pollen size and morphology.

Microscopic imaging is an accurate way to determine the pollen type based on both pollen size and morphology. This process treats the captured image in a real-time manner.

After pollen type determination, additional voltages may be applied to the materials to provide deformation to assist in particle release. This is possible for materials which themselves deform in response to applied voltages, as mentioned above. The particles are then released under an air flow as shown schematically in Figure 7E. The release voltages may be applied only to those units where pollen/dust is trapped.

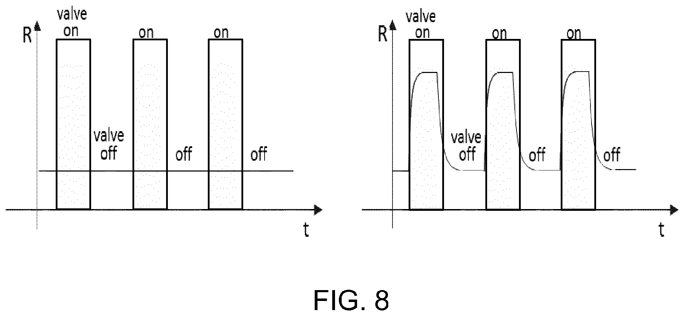

Figure 8 in the left image shows a material response R of the flexible material as the valve toggles between on (humid air) and off (dry air) positions with a dust particle. The material reading (strain) is constant.

Figure 8 in the right image shows the material response R of the flexible material as the valve toggles between on (humid air) and off (dry air) positions with a pollen particle. The material reading (strain) fluctuates.

The invention may be employed as part of a humidifier or de-humidifier, or air purification system, or it may be a standalone device as a pollen sensor or air quality sensor. It may be used to provide an alert when a particular allergen is detected which is a hazard to a particular user of the device.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A particle or pollen sensor (1) comprising:
a treatment region (2);
a humidity control system (4) for controlling the relative humidity in the treatment region;
a particle analysis system (6, 8) for determining particle size before and after treatment in the treatment region; and
a processor (9) for identifying a particle type based on particle size changes caused by the treatment.

2. A sensor as claimed in claim 1, wherein the treatment region comprises a treatment chamber, and the particle analysis system comprises:
a first analysis system (6) upstream of the treatment chamber; and
a second analysis system (8) downstream of the treatment chamber.

3. A sensor as claimed in claim 1, wherein the treatment region comprises a treatment chamber, and the particle analysis system comprises:
a single analysis system (6) for use alternately in analyzing a particle flow upstream and downstream of the treatment chamber.

4. A sensor as claimed in claim 2 or 3, comprising two or more treatment chambers, and wherein the particle analysis system is for determining particle size upstream and downstream of each treatment chamber.

5. A sensor as claimed in any one of claims 2 to 4, wherein the treatment chamber comprises a hydration chamber, and the humidity control system comprises a water tank or a hydrogel.

6. A sensor as claimed in any one of claims 2 to 4, wherein the treatment chamber comprises a dehydration chamber, and the humidity control system comprises a heating tube or a drying agent.

7. A sensor as claimed in any one of claims 2 to 7, wherein the particle analysis system comprises an optical scattering analysis system for obtaining a particle count and particle size distribution information.

8. A sensor as claimed in any one of claims 1 to 7, wherein the particle type comprises a pollen type.

9. A sensor as claimed in claim 1, wherein the treatment region comprises a particle capture zone, and the humidity control system comprises:
a first input for receiving relatively dry air;
a second input for receiving relatively humid air; and
a selection valve for coupling the first or second input to the particle capture zone.

10. A sensor as claimed in claim 9, wherein the first input is coupled to a moisture absorbent and the second input is coupled to a source of humidity.

11. A sensor as claimed in claim 9 or 10, wherein the particle analysis system comprises an optical or electrical sensor for detecting changes in the optical or electrical properties of the particle capture zone.

12. A sensor as claimed in claim 11, wherein the particle type comprises pollen or not-pollen.

13. A sensor as claimed in claim 12, further comprising a further optical analysis system for determining, for a detected pollen particle, a type of pollen.

14. A particle or pollen sensing method comprising:
controlling the relative humidity in a treatment region;
determining a particle size before and after treatment in the treatment region; and
identifying a particle type based on particle size changes caused by the treatment.

15. A method as claimed in claim 14, controlling the relative humidity comprises increasing the relative humidity compared to an ambient relative humidity and/or decreasing the relative humidity compared to the ambient relative humidity.
